# EUROPÄISCHE PATENTSCHRIFT

(11) **EP 1 915 718 B1**
(45) Veröffentlichungstag und Bekanntmachung des Hinweises auf die Patenterteilung: **04.04.2012**
(21) Anmeldenummer: 06776761.6
(22) Anmeldetag: 10.08.2006
(51) Int. Cl.: G06F 21/20

(54) **VERFAHREN ZUR ABSICHERUNG DER AUTHENTISIERUNG EINES TRAGBAREN DATENTRÄGERS GEGEN EIN LESEGERÄT ÜBER EINEN UNSICHEREN KOMMUNIKATIONSWEG**
METHOD FOR PROTECTING THE AUTHENTICATION OF A PORTABLE DATA CARRIER RELATIVE TO A READING DEVICE VIA AN UNSECURE COMMUNICATIONS PATH
PROCEDE POUR PROTEGER L'AUTHENTIFICATION D'UN SUPPORT DE DONNEES PORTABLE VIS-A-VIS D'UN LECTEUR PAR UNE VOIE DE COMMUNICATION NON SECURISEE

(30) Priorität: 11.08.2005 DE 102005038106
(43) Veröffentlichungstag der Anmeldung: 30.04.2008
(73) Patentinhaber: Giesecke & Devrient GmbH, 81677 München (DE)
(72) Erfinder: MEISTER, Gisela, 81737 München (DE); URMANN, Jens, 69121 Heidelberg (DE)
(86) Internationale Anmeldenummer: PCT/EP2006/007942
(87) Internationale Veröffentlichungsnummer: WO 2007/017288

(56) Entgegenhaltungen:
- EP-A2- 0 506 637
- WO-A-01/11817
- WO-A-96/00485
- DE-A1- 19 856 362
- US-A1- 6 161 185
- US-A1- 2002 059 146
- US-B1- 6 377 691

## Beschreibung

Die Erfindung betrifft die Absicherung der Authentisierung zwischen einem tragbaren Datenträger und einem Lesegerät über eine ungesicherte Kommunikationsverbindung gegen unerwünschte Kenntnisnahme durch Angreifer. Insbesondere betrifft die Erfindung die Absicherung der Authentisierung einer Ausweiskarte im Chipkartenformat mit einer Kontaktlosschnittstelle gegen ein kontaktlos darauf zugreifendes Lesegerät.

Zur Absicherung des Datenverkehrs zwischen einer Chipkarte und einem Lesegerät ist es üblich, diesen Datenverkehr durch Verschlüsselung für einen Angreifer unbrauchbar zu machen. Zur Durchführung der Verschlüsselung stehen in bekannter Weise sowohl mathematische Methoden wie RSA, Diffie-Helman Key Agreement Verfahren, AES oder DES als auch die Einbeziehung persönlicher Merkmale eines Nutzers, etwa einer Geheimzahl oder eines biometrischen Merkmales zur Verfügung. Eine Vielzahl bekannter Verschlüsselungstechniken ist sehr leistungsfähig, stellt aber durchweg entsprechend hohe Anforderungen an die zu seiner Nutzung bereitzustellende technische Infrastruktur. Ein sehr leistungsfähiges Konzept beruht hier auf der Verwendung von Sicherheitsmodulen, etwa in Gestalt sogenannter TPMs, die jeweils in einem tragbaren Datenträger und einem Lesegerät angeordnet sind. Diese Sicherheitsmodule bewirken ohne Eingreifen eines Nutzers eine zuverlässige wechselseitige Authentisierung. Das Konzept erfordert allerdings, daß geeignete Sicherheitsmodule in jedem Lesegerät vorhanden sind. In Konstellationen, in denen ein Sicherheitsmodul in einem Lesegerät fehlt, ist eine sichere Authentisierung dann nicht möglich.

Zur Absicherung einer auf der Präsentation eines persönlichen Merkmales beruhenden Authentisierung eines Nutzers gegenüber einem Computer ist es aus der DE 198 41 886 C2 bekannt, das persönliche Merkmal, das die Gestalt eines Paßwortes besitzt, von Sitzung zu Sitzung zu variieren. Präsentation und Variation des Paßwortes erfolgen dabei durch eine Chipkarte. Das bekannte Konzept ist auf eine Authentisierung eines Nutzers gegenüber bestimmten Geräten zugeschnitten, die zur Verwaltung des jeweilse gültigen Passwortes eingerichtet sein müssen. Eine Authentisierung gegenüber einem Gerät, das nicht entsprechend eingerichtet ist, erlaubt es nicht.

In der Praxis besteht insbesondere ein Bedürfnis nach einer für einen Nutzer besser nachvollziehbaren Absicherung der Authentisierung zwischen einem tragbaren Datenträger und einem Lesegerät, das den tragbaren Datenträger selbsttätig über eine unsichere Schnittstelle kontaktiert. Situationen dieser Art sind typischerweise beim Auslesen eines elektronischen Reisepasses an einer Grenzstelle gegeben. Elektronische Reisepässe besitzen einen Chip mit darin gespeicherten persönlichen Daten des Besitzers sowie eine in der Regel kontaktlos arbeitende Schnittstelle, über die er berührungslos ausgelesen werden kann. Die Lesegeräte verfügen regelmäßig über kein Sicherheitsmodul. Ihre Authentisierung gegenüber dem elektronischen Paß erfolgt vielmehr typischerweise mit Hilfe eines festen Schlüssels, der von dem elektronischen Paß selbst entnommen wird, auf den er beispielsweise aufgedruckt ist. Da der Schlüssel fest ist und die Datenübertragung über eine Kontaktlosschnittstelle erfolgt, ist die Authentisierung hier angreifbar. Sie kann zudem ohne explizite Zustimmung des Paßbesitzers erfolgen. In einer Variante muß der Paßbesitzer einen Schlüssel bzw. eine feste persönliche Kennung zur Freigabe der Geräteauthentisierung manuell eingeben oder an einer separaten, zum Beispiel optischen Schnittstelle präsentieren. Zwar wird in diesem Fall eine explizite Zustimmung des Benutzers erreicht, jedoch erfolgt die Ü-Übertragung des Schlüssels bzw. der Kennung zu dem elektronischen Paß praktisch ungesichert. Da die Kennung immer identisch ist, ist die Übertragung entsprechend angreifbar.

Aus der WO 01/11817 A2 ist ein Netzwerkauthentisierungsverfahren bekannt, das zwischen einem Nutzerterminal und einer Authentisierungszentrale ausgeführt wird. Der Nutzer präsentiert dabei an dem Terminal ein Paßwort, das von diesem mittels eines geeigneten Algorithmus in einen Nutzerschlüssel übersetzt wird. Damit wird ein Chiffrat erzeugt und an die Authentisierungszentrale geschickt. Diese identifiziert einen zu dem Nutzerschlüssel korrespondierenden Schlüssel und prüft damit das übersandte Chiffrat. Bei Übereinstimmung erhält der Nutzer Zugang zu dem Netzwerk. Das bekannte Verfahren wendet insbesondere sogenannte "man-in-the-middle"-Attacken ab, setzt aber voraus, daß der Nutzer dem Terminal vertraut. Für Anwendungen, in denen der Nutzer keine Herrschaft über das Terminal hat, ist das Verfahren nicht geeignet.

Aus der DE 198 56 362 A1 ist ein Transaktionsdatenaustauschsystem bekannt, bei dem die Datenübertragung zwischen einem tragbaren Datenträger und einem Dateneingabe-/Datenausgabegerät mit Hilfe eines variablen Schlüssels gesichert wird, der aus den jeweiligen Transaktionsdaten in Kombination mit einer von einem Nutzer zu präsentierenden unveränderlichen PIN gewonnen wird. Das Verfahren eignet sich ebenfalls nicht für Anwendungen, in denen der Nutzer dem eingesetzten Dateneingabe/- Datenausgabegerät grundsätzlich nicht vertrauen kann.

Es ist Aufgabe der Erfindung ein Verfahren zur Authentisierung eines tragbaren Datenträgers gegen ein Lesegerät über einen unsicheren Kommunikationsweg anzugeben, das sicherstellt, daß die Authentisierung zu jeder Zeit gegen unerwünschte Zugriffe abgesichert ist.

Die Aufgabe wird gelöst durch ein Verfahren mit den Merkmalen des Hauptanspruchs.

Das erfindungsgemäße Verfahren basiert auf der Verwendung eines variablen Authentisierungschlüssels, der nur dem Nutzer bekannt und dessen Bildungsvorschrift im tragbaren Datenträger hinterlegt ist. Es stellt sicher, daß die Authentisierung eines tragbaren Datenträgers gegen ein Lesegerät nur erfolgt, wenn zuvor der Nutzer durch Präsentation eines richtigen variablen Authentisierungsschlüssels erfolgreich gegen den tragbaren Datenträger authentisiert wurde. Bei erfolgreicher Authentisierung erzeugt der tragbare Datenträger einen neuen Authentisierungsschlüssel für die nächste Authentisierung, der über den dann bestehenden sicheren Übertragungsweg an das Lesegerät übermittelt und von diesem an den Nutzer ausgegeben wird. An dem Lesegerät sind dabei keine besonderen Vorkehrungen hinsichtlich Hard- und Softwarewareausstattung zu treffen, insbesondere sind keine Sicherheitsmodule und keine geheimen Schlüssel bereitzustellen oder zu verwalten. Besonderer Vorteil des erfindungsgemäßen Verfahrens ist, daß die Datenkommunikation über die unsichere Schnittstelle von Anfang an gesichert erfolgt. Da das Verfahren keinerlei Anforderungen an die Hardwareinfrastruktur des Lesegerätes stellt, kann es leicht realisiert werden und ist kostengünstig.

Ein Ausführungsbeispiel der Erfindung wird nachfolgend unter Bezugnahme auf die Zeichnungen näher erläutert. Es zeigen:
- Fig.1: ein Strukturschaubild einer Anordnung zur Durchführung des erfindungsgemäßen Verfahrens,
- Fig. 2: ein Ablaufdiagramm mit den zwischen den beteiligten Komponenten bei der Durchführung des erfindungsgemäßen Verfahrens ausgeführten Schritten.

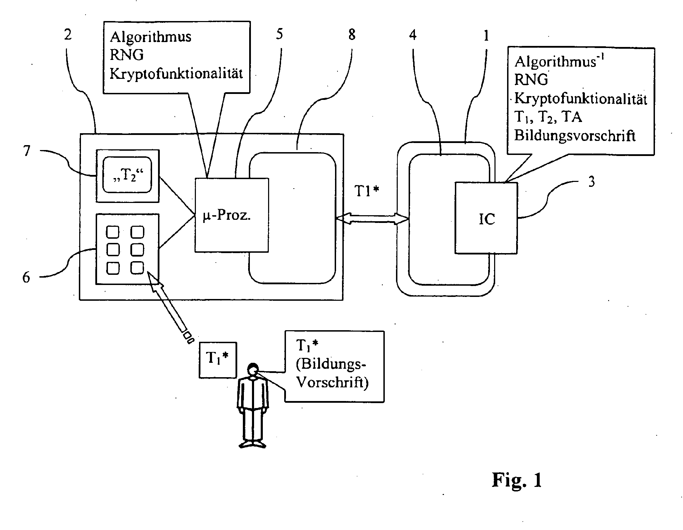

Komponenten der in Fig. 1 dargestellten Anordnung sind ein tragbarer Datenträger 1, ein zur Durchführung eines Datenaustausches mit dem tragbaren Datenträger 1 über einen grundsätzlich unsicheren Kommunikationsweg ausgebildetes Lesegerät 2 sowie einen Nutzer 11, der Besitzer des tragbaren Datenträgers ist.

Der tragbare Datenträger 1 hat typischerweise die Gestalt einer Standardchipkarte, wie sie z.B. im "Handbuch der Chipkarten", W. Effing, W. Rankl, Hanser Verlag, 4. Auflage, 2002, beschrieben ist, und besitzt auf einem vorzugsweise aus einem Plastikmaterial bestehenden Kartenkörper einen integrierten Schaltkreis 3, der mit einer kontaktlos arbeitenden Schnittstelle 4 zur Kommunikation mit einem Lesegerät 2 verbunden ist. Der integrierte Schaltkreis 3 ist als "Smart Card" Chip ausgeführt, wie er ebenfalls in dem genannten "Handbuch der Chipkarten" beschrieben ist und weist die Grundkomponenten eines üblichen Computers auf. Insbesondere besitzt er einen Mikrocontroller mit einer zentralen Prozessoreinheit und einem nichtflüchtigen Speicher zur Aufnahme eines Betriebssystems sowie zur nichtflüchtigen Speicherung von Nutzerdaten. Die Kontaktlosschnittstelle 4 hat zweckmäßig, wie in der Figur 1 angedeutet, die Gestalt einer Spule, kann aber auch andere Ausprägungen besitzen. Der tragbare Datenträger 1 unterstützt Anwendungen, in denen sensible Daten von dem tragbaren Datenträger 1 an eine Lesegerät übertragen werden. Typischerweise dient er, beispielsweise in Form einer Geldkarte, als Ausweis zur Ausführung gesicherter elektronischer Transaktionen und/oder, beispielsweise in Gestalt eines elektronischen Passes, als Ausweis zum Nachweis der Identität eines Nutzers 11 und / oder zur Erzeugung digitaler Signaturen.

Das Lesegerät 2 basiert auf den Grundkomponenten eines üblichen Computers und besitzt einen Mikroprozessor 5, dem eine zu der Schnittstelle 4 des tragbaren Datenträgers 1 korrespondierende, kontaktlos arbeitende Schnittstelle 8 zugeordnet ist. Analog zu dem tragbaren Datenträger 1 ist die Schnittstelle 8 zweckmäßig eine Spulenanordnung. Weiter sind mit dem Mikroprozessor 5 eine Eingabevorrichtung 6 und eine Ausgabevorrichtung 7 verbunden. Die Eingabevorrichtung 5 hat typischerweise die Gestalt einer Tastatur, die Ausgabevorrichtung 7 ist zweckmäßig eine Bildanzeige. Beide Vorrichtungen 6, 7 können auch andere Ausführungsformen aufweisen, beispielsweise kann die Eingabevorrichtung 6 ein optischer Leser sein, die Ausgabevorrichtung 7 eine Sprachausgabe. Die Ausgabevorrichtung 7 kann auch eine optische oder elektronische kontaktbehaftete oder kontaktlose Schnittstelle, etwa eine Infrarot- eine NFC (*Near Field Communication*)- oder eine BLUETOOTH-Schnittstelle, aufweisen, über die Daten an ein tragbares Gerät, etwa ein Handy, mit korrespondierender Schnittstelle übertragen werden können. Das Lesegerät 2 kann ein im privaten Besitz eines Nutzers 11 befindliches Gerät sein, etwa ein Heimcomputer, aber auch ein im öffentlichen Bereich eingesetztes Gerät, etwa ein Gerät zum Lesen von elektronischen Ausweisen für Grenzstellen sein.

Der Nutzer 11 ist Besitzer des tragbaren Datenträgers 1. Er hat Kenntnis von einem variablen Schlüssel in Gestalt einer persönlichen Kennung T₁*, mittels derer er sich gegenüber dem tragbaren Datenträger 1 authentisieren kann. In besonders vorteilhafter Ausführung des Verfahren besitzt er desweiteren Kenntnis von einer auch auf dem tragbaren Datenträger 1 hinterlegten Bildungsvorschrift, gemäß der aus der Kennung T₁* eine weitere, folgende Kennung T₂* gebildet werden kann.

Über den zwischen den Schnittstellen 4, 8 ausgebildeten Kommunikationsweg führen der tragbare Datenträger und das Lesegerät 2 einen berührungslosen Datenaustausch, der durch den Pfeil angedeutet ist. Im Rahmen des Datenaustausches werden sensible Daten, etwa persönliche Daten eines Nutzers 11, übertragen. Zur Absicherung des Datenaustausches verfügen der Mikroprozessor 5 des Lesegerätes 2 sowie der integrierte Schaltkreis 3 des tragbaren Datenträgers 1 jeweils über eine Kryptofunktionalität, mittels derer übertragene Daten verschleiert werden. Als Kryptofunktionalität kommt beispielsweise eine symmetrische Verschlüsselungstechnik wie DES oder 3DES zur Anwendung. Zur Unterstützung der Absicherung der Datenaustausches besitzen der Mikroprozessor 5 und der integrierte Schaltkreis 3 weiter jeweils einen üblichen Zufallszahlengenerator RNG.

Im Mikroprozessor 5 des Lesegerätes 2 ist desweiteren eine Verschlüsselungstechnik implementiert , mit dem für einen tragbaren Datenträger 1 bestimmte Botschaften verschlüsselt werden können. Die Verschlüsselungstechnik beinhaltet einen an sich unveränderlichen Verschlüsselungsalgorithmus, der aber bei jeder Anwendung einen neuen, variablen Schlüssel verwendet. Als Schlüssel dient insbesondere eine von einem Nutzer 11 präsentierte persönliche Kennung Tₙ* mit n =1, 2, 3,...

In dem integrierten Schaltkreis 3 des tragbaren Datenträgers 1 ist korrespondierend zu der im Lesegerät 2 vorhandenen Verschlüsselungstechnik eine inverse Verschlüsselungstechnik realisiert, die es erlaubt Botschaften zu entschlüsseln, die von einem Lesegerät 2 mittels der darin implementierten Verschlüsselungstechnik verschlüsselt wurden. Die inverse Verschlüsselungstechnik beinhaltet insbesondere einen an sich unveränderlichen Umkehralgorithmus zu dem im Lesegerät 2 vorhandenen Algorithmus, der bei jeder Anwendung einen neuen Schlüssel verwendet. Der Umkehralgorithmus nutzt als Schlüssel eine Kennung T₁, die von einer im integrierten Schaltkreis 3 implementierten Erzeugerfunktion bereitgestellt wird. Die Erzeugerfunktion basiert auf einer Bildungsvorschrift, gemäß der aus einer ersten persönlichen Kennung Tₙ eine weitere persönliche Kennung Tₙ₊₁ bestimmbar ist. Im nichtflüchtigen Speicher des integrierten Schaltkreises 3 sind ferner zumindest die letzte verwendete persönliche Kennung T₁ sowie die aktuell gebildete persönliche Kennung T₂ gespeichert. Weiterhin ist in dem nichtflüchtigen Speicher zweckmäßig ein unveränderlicher Administratorschlüssel TA hinterlegt.

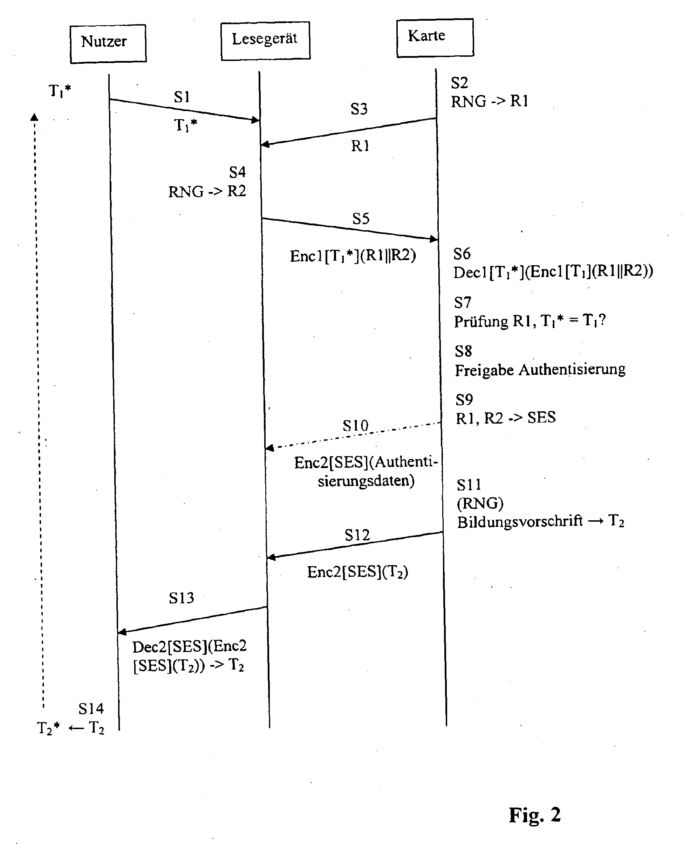

Fig. 2 veranschaulicht die erfindungsgemäße Nutzung der in Fig. 1 gezeigten Anordnung. Dabei wird für das Lesegerät 2 eine Ausprägung als Grenzstellenlesegerät zugrundegelegt, mit dem ein tragbarere Datenträger 1 in Gestalt eines elektronischen Passes ausgelesen wird. Zur Vereinfachung der Beschreibung wird der tragbare Datenträger 1 nachfolgend nur als Karte 1 bezeichnet und nicht mehr nach einzelnen Strukturelementen differenziert.

Die Nutzung setzt ein, Schritt S1, indem ein Nutzer 11 an einem Lesegerät 2 eine Karte 1 sowie eine persönliche Kennung T₁* präsentiert. Die Kennung T₁* gibt er zum Beispiel über eine Tastatur 6 ein. Sie fungiert als variabler Schlüssel für die im Lesegerät 2 eingerichtete Verschlüsselungstechnik.

In einem zweckmäßig gleichzeitig ausgeführten Schritt S2 veranlaßt die Karte 1 ihren Zufallsgenerator RNG zur Erzeugung einer Kontrollinformation in Gestalt einer Zufallszahl R1, die sie zum einen in ihrem Speicher als Referenzwert speichert, zum anderen in einem Schritt S3 über die Schnittstellen 4, 8 an das Lesegerät 2 übermittelt.

Auf die Präsentation der Kennung T₁* ermittelt das Lesegerät 2 in einem Schritt S4 - der auch bereits vor dem Schritt S2 oder S3 ausgeführt werden kann - mittels des im Mikroprozessor 5 eingerichteten Zufallszahlengenerators RNG eine Prüfinformation in Gestalt einer zweiten Zufallszahl R2.

Die Prüfinformation R2 verknüpft das Lesegerät 2 sodann mit der von der Karte 1 erhaltenen Kontrollinformationin R1. Das Ergebnis dieser Verknüpfung verschlüsselt der Mikroprozessor 5 gemäß der Verschlüsselungstechnik, wobei er als Schlüssel die im Schritt S1 vom Nutzer 11 präsentierte Kennung T₁* verwendet. Das durch die Verschlüsselung entstehende Chiffrat übermittelt das Lesegerät 2 in einer Antwortbotschaft in einem Schritt S5 über die Kontaktlosschnittstelle 4, 8 an die Karte 1.

Auf den Eingang der Antwortbotschaft liest die Karte 1 aus ihrem nichtflüchtigen Speicher die darin gespeicherte Kennung T₁ aus. Mit der Kennung T₁ als Schlüssel wendet sie auf das in der Antwortbotschaft enthaltene Chiffrat sodann den Umkehralgorithmus an und entschlüsselt dieses damit, Schritt S6. Auf der Karte 1 liegen daraufhin die in der Antwortbotschaft enthaltenen Zufallszahlen R1 und R2 sowie die von dem Benutzer 11 präsentierte Kennung T₁* vor.

In einem folgenden Schritt S7 prüft die Karte 1, ob die zurückerhaltene Zufallszahl R1 sowie die Benutzerkennung T₁* mit den in der Karte 1 gespeicherten entsprechenden Referenzwerten übereinstimmen. Ist das der Fall, veranlaßt die Karte 1 die Freischaltung der Authentisierung der Karte 1 gegen das Lesegerät 2, Schritt S8. Die Benutzerkennung T₁ kennzeichnet die Karte 1 anschließend als verbraucht.

Zweckmäßig ermittelt sie hierbei zunächst in einem Schritt S9 aus den ihr nun vorliegenden Zufallszahlen R1 und R2 einen Sitzungsschlüssel aus SES. Weiter führt die Karte 1 bestimmte Authentisierungsfunktionen aus und liest aus ihrem Speicher beispielsweise Autorisierungsdaten, etwa in Form eines Zertifikates, Benutzerverifikationsdaten zur Freischaltung einer Signatur und/oder einen Hashwert aus.

Die ausgelesenen Daten verschlüsselt die Karte 1 unter Anwendung des bestimmten Sitzungsschlüssels SES und der Kryptofunktionalität und übermittelt sie so gesichert an das Lesegerät 2, Schritt S10.

Desweiteren ermittelt die Karte 1 nach in Schritt S7 festgestellter Übereinstimmung einen neuen Wert T₂ für die persönliche Kennung des Nutzers 11, Schritt S9. Die Ermittlung erfolgt gemäß der auf der Karte 1 hinterlegten Bildungsvorschrift. In besonders einfacher Weise kann sie auf einer fortlaufenden Weiterzählung des alten Wertes T₁ nach Art eines Transaktionszählers beruhen. Ohne weiteres kann die Bildungsvorschrift aber auch komplexere mathematische Operationen einschließen. In einer besonders handhabungsfreundlichen Ausführung ist die Bildungsvorschrift so beschaffen, daß der Nutzer 11 ohne Hilfsmittel dazu in der Lage ist, aus einem gegebenen ersten Wert Tₙ für die persönliche Kennung ebenfalls den nächstfolgenden Wert Tₙ₊₁ zu ermitteln. Alternativ kann die Bildungsvorschrift in die Erzeugung von Kennungen Tₙ, Tₙ₊₁, Tₙ₊₂ determinierende Zufallszahlen einbeziehen, die von dem Zufallszahlengenerator RNG geliefert werden. Aufeinanderfolgende Kennungen Tₙ, Tₙ₊₁ sind dann nach Art von Transaktionsnummern in keiner erkennbaren Weise miteinander verbunden.

Den ermittelten Wert T₂ für die persönliche Kennung des Nutzers 11 verschlüsselt die Karte 11 mit dem Sitzungsschlüssel SES unter Anwendung der Kryptofunktionalität und übersendet das entstehende Chiffrat in Schritt S12 an das Lesegerät 2.

Das Lesegerät 2 entschlüsselt das empfangene Chiffrat unter Verwendung des in der Zwischenzeit gleichfalls aus den Zufallszahlen R1 und R2 abgeleiteten Sitzungsschlüssels SES mittels der Kryptofunktionalität, Schritt S13, und erhält dadurch den in dem Chiffrat enthaltenen neuen Wert T₂ für die persönliche Kennung des Nutzers 11. Den neuen Wert T₂ gibt das Lesegerät 2 sodann an den Nutzer 11 aus, beispielsweise durch Darstellung auf der Anzeigevorrichtung 7. Zweckmäßig kann die Ausgabe auch oder zusätzlich elektronisch oder optisch über eine geeignete Schnittstelle erfolgen, so daß der Nutzer 11 den neuen Wert für T₂ beispielsweise durch eine kontaktlose oder kontaktbehaftete Datenübertragung in ein Handy übernehmen kann.

Der Nutzer 11 übernimmt den Wert T₂ als neue persönliche Kennung T₂*, Schritt S14, um sie bei der nächsten Authentisierung in Schritt S1 zu präsentieren. Soweit ihm die im integrierten Schaltkreis 3 der Karte 1 hinterlegte Bildungsvorschrift bekannt ist, kann er durch Anwendung derselben auf den ursprünglich eingegebenen Wert T₁* zudem prüfen, ob der daraus resultierende Wert mit dem von dem Lesegerät 2 ausgegebenen Wert T₂ übereinstimmt:

In einer Variante des vorbeschriebenen Verfahrens erfolgt die Freigabe der Authentisierung nicht durch die Karte 1 nach Verifizierung der vom Nutzer 11 eingegebenen persönlichen Kennung T₁ in Schritt S7, sondern erst im Anschluß an ein besonderes Bestätigungssignal, das vom Nutzer 11 nach Prüfung des an das Lesegerät 2 übermittelten neuen Wertes T₂ für die persönliche Kennung veranlaßt wird. Der Nutzer 11 prüft dabei die Kennung T₂ durch Anwendung derselben Bildungsvorschrift, wie sie im integrierten Schaltkreis 3 der Karte 1 hinterlegt ist, auf die ursprünglich eingegebene persönliche Kennung T₁* und Vergleich des resultierenden Wertes mit dem vom Lesegerät 2 ausgegebenen Wert T₂.

Um das Verfahren erstmals einsetzen zu können, erhält der Nutzer 11 zusammen mit einer Karte 1 eine Information über die erste im nichtflüchtigen Speicher der Karte 1 gespeicherte persönliche Kennung To. Je nach Komplexität der im integrierten Schaltkreis 3 hinterlegten Bildungsvorschrift erhält er zweckmäßig einen Satz von mehreren aufeinanderfolgenden persönlichen Kennungen. Für den Fall, daß ein Nutzer 11 die Kenntnis einer aktuellen persönlichen Kennung bzw. des gültigen variablen Schlüssels verliert, ist zweckmäßig vorgesehen, daß eine Authentisierung mit Hilfe des zu diesem Zweck auf der Karte 1 hinterlegten Administratorschlüssels TA freigegeben werden kann. Der Administratorschlüssel TA gestattet dann die Generierung einer neuen persönlichen Kennung Tₙ.

Unter Beibehaltung des grundlegenden Gedankens, die Durchführung der Authentisierung eines tragbaren Datenträgers 1 gegenüber einem Lesegerät 2 dadurch abzusichern, daß sie nur freigegeben wird, wenn der berechtigte Nutzer 11 einen variablen Schlüssel T₁* präsentiert hat und mit dieser in richtiger Weise eine von dem Datenträger 1 bereitgestellte Kontrollinformation R1 verschlüsselt wurde, gestattet die Erfindung weitere Ausgestaltungen und Weiterbildungen. Unter anderem kann das Verfahren vorteilhaft auch dann eingesetzt werden, wenn im Lesegerät 2 ein Sicherheitsmodul zur Verfügung steht. Das Verfahren kann hier insbesondere dazu dienen, die Kommunikation zwischen den Sicherheitsmodulen zu starten. Da nach erfolgter Authentisierung dem Lesegerät vertraut werden kann, kann in diesem Fall die Ermittlung neuer Werte für die persönliche Kennung des Nutzers 11 auch ganz oder teilweise außerhalb der Karte 1 auf dem sicher verbundenen Lesegerät erfolgen. Viele Ausgestaltungen gestattet die Handhabung der variablen Schlüssel bzw. Kennungen Tₙ. Anstelle von genau einer neuen Kennung T₂ können etwa im Schritt S12 auch jeweils mehrere im voraus erzeugte Kennungen T₃, T₄,...übertragen werden. Vorgesehen sein kann dann weiter, daß der Nutzer 11 eine beliebige der ihm bekannten Kennungen präsentiert oder aber bei der Präsentation eine vorgegeben Reihenfolge beachten muß.

## Patentansprüche

1. Verfahren zur Absicherung der Authentisierung eines tragbaren Datenträgers gegen ein Lesegerät über einen unsichere Kommunikationsweg, wobei von dem tragbaren Datenträger (1) eine Kontrollinformation (R1) bereitgestellt wird, die vom Lesegerät (2) durch Anwendung einer definierten Verschlüsselungstechnik in eine Antwortbotschaft (S5) überführt und zur Prüfung an den tragbaren Datenträger (1) übermittelt wird, welcher bei Nachweis der Anwendung der richtigen Verschlüsselungstechnik die Authentisierung freigibt (S8), **dadurch gekennzeichnet, daß** die Verschlüsselungstechnik auf der Verwendung eines variablen Kennung (T₁*) basiert, welche gemäß einer bestimmten Bildungsvorschrift erzeugt und von einem Nutzer (11) dem Lesegerät (2) präsentiert wurde und durch den tragbaren Datenträger (1) nach Erhalt einer von einem Nutzer (11) präsentierten Kennung (T₁*) eine weitere Kennung (T₂) erzeugt und durch das Lesegerät (2) zur Präsentation in einer folgenden Authentisierung an den Nutzer (11) ausgegeben wird.

2. Verfahren nach Anspruch 1, **dadurch gekennzeichnet, daß** die Bildungsvorschrift auf dem tragbaren Datenträger (1) hinterlegt ist.

3. Verfahren nach Anspruch 1, **dadurch gekennzeichnet, daß** die Bildungsvorschrift dem Nutzer (11) bekannt ist.

4. Verfahren nach Anspruch 1, **dadurch gekennzeichnet, daß** zur Erzeugung einer variablen Kennung (Tₙ₊₁) ein vorhergehender Wert für die Kennung (Tₙ) zugrundegelegt und dieser gemäß der Bildungsvorschrift verändert wird.

5. Verfahren nach Anspruch 4, **dadurch gekennzeichnet, daß** die Bildungsvorschrift in der Addition eines festen Wertes zum zugrundegelegten Wert (Tn) besteht.

6. Verfahren nach Anspruch 1, **dadurch gekennzeichnet, daß** in die Antwortbotschaft (S5) eine Prüfinformation (R2) einbezogen wird, welche im Lesegerät (2) erzeugt wird.

7. Verfahren nach Anspruch 6, **dadurch gekennzeichnet, daß** die Kontrollinformation (R1) und die Prüfinformation (R2) jeweils Zufallszahlen sind.

8. Verfahren nach Anspruch 1, **dadurch gekennzeichnet, daß** einem Nutzer (11) eine erste persönliche Kennung (T₀) als variable Kennung mit der Übergabe eines tragbaren Datenträgers (1) übermittelt wird.

9. Verfahren nach Anspruch 1, **dadurch gekennzeichnet, daß** die weitere Kennung (T₂) nach erfolgreicher Authentisierung an das Lesegerät (2) übermittelt wird.

10. Tragbarer Datenträger zur Durchführung eines Verfahrens gemäß Anspruch 1 mit einem Kartenkörper sowie einem Mikrocontroller (3), **dadurch gekennzeichnet, daß** in den Mikrocontroller (3) eine Bildungsvorschrift implementiert ist, welche zu einem ersten Wert für eine Kennung (Tₙ) einen folgenden Wert für eine Kennung (Tₙ₊₁) erzeugt.

11. Tragbarer Datenträger nach Anspruch 10, **dadurch gekennzeichnet, daß** der Tragbare Datenträger (1) über einen Zufallszahlengenerator (RNG) zu Erzeugung einer Zufallszahl verfügt, die in die Bildungsvorschrift einfließt und den folgenden Wert für eine Kennung (Tₙ₊₁) determiniert.

## Claims

1. A method for securing the authentication of a portable data carrier vis-à-vis a reading device via an insecure communication channel, whereby there is made available by the portable data carrier (1) control information (R1) which is converted to a response message (S5) by the reading device (2) by application of a defined encryption technology and transmitted for checking to the portable data carrier (1), which releases (S8) the authentication upon proof of application of the correct encryption technology, **characterized in that** the encryption technology is based on the use of a variable identifier (T₁*) which has been generated according to a certain generating formula and presented to the reading device (2) by a user (11), and there is generated by the portable data carrier (1) after reception of an identifier (T₁*) presented by a user (11) a further identifier (T₂), which is output to the user (11) by the reading device (2) for presentation in a following authentication.

2. The method according to claim 1, **characterized in that** the generating formula is deposited on the portable data carrier (1).

3. The method according to claim 1, **characterized in that** the generating formula is known to the user (11).

4. The method according to claim 1, **characterized in that** for generation of a variable identifier (Tₙ₊₁) a preceding value of the identifier (Tₙ) is taken as a basis and said value is changed according to the generating formula.

5. The method according to claim 4, **characterized in that** the generating formula consists in the addition of a fixed value to the value (Tn) taken as a basis.

6. The method according to claim 1, **characterized in that** there is included in the response message (S5) check information (R2) which is generated in the reading device (2).

7. The method according to claim 6, **characterized in that** the control information (R1) and the check information (R2) are respectively random numbers.

8. The method according to claim 1, **characterized in that** a first personal identifier (T₀) is transmitted to a user (11) as a variable identifier with the hand-over of a portable data carrier (1).

9. The method according to claim 1, **characterized in that** the further identifier (T₂) is transmitted to the reading device (2) after successful authentication.

10. A portable data carrier for carrying out a method according to claim 1 having a card body and a microcontroller (3), **characterized in that** there is implemented in the microcontroller (3) a generating formula which generates for a first value of an identifier (Tₙ) a following value of an identifier (Tₙ₊₁).

11. The portable data carrier according to claim 10, **characterized in that** the portable data carrier (1) has a random number generator (RNG) for generating a random number which enters into the generating formula and determines the following value of an identifier (Tₙ₊₁).

## Revendications

1. Procédé pour protéger l'authentification d'un support de données portable vis-à-vis d'un lecteur via une voie de communication non fiable, une information de contrôle (R1) étant mise à disposition par le support de données (1) portable, laquelle est transformée en un message de réponse (S5) par le lecteur (2) moyennant l'application d'une technique de cryptage définie et est transférée pour contrôle au support de données (1) portable qui libère l'authentification (S8) lorsqu'il a été détecté que la bonne technique de cryptage a été appliquée, **caractérisé en ce que** la technique de cryptage est basée sur l'utilisation d'un code (T₁*) variable qui est généré selon une règle de formation déterminée et qui a été présenté au lecteur (2) par un utilisateur (11), et, après l'obtention d'un code (T₁*) présenté par l'utilisateur (11), un autre code (T₂) est généré par le support de données (1) portable et est édité par le lecteur (2) à l'attention de l'utilisateur (11) afin qu'il le présente au cours d'une authentification ultérieure.

2. Procédé selon la revendication 1, **caractérisé en ce que** la règle de formation est stockée sur le support de données (1) portable.

3. Procédé selon la revendication 1, **caractérisé en ce que** la règle de formation est connue de l'utilisateur (11).

4. Procédé selon la revendication 1, **caractérisé en ce que** pour générer un code (Tₙ₊₁) variable, une valeur précédente pour le code (Tₙ) est prise pour base et celle-ci est modifiée selon la règle de formation.

5. Procédé selon la revendication 4, **caractérisé en ce que** la règle de formation consiste à additionner une valeur fixe à la valeur (Tₙ) prise pour base.

6. Procédé selon la revendication 1, **caractérisé en ce qu'**une information de vérification (R2), générée dans le lecteur (2), est intégrée dans le message de réponse (S5).

7. Procédé selon la revendication 6, **caractérisé en ce que** l'information de contrôle (R1) et l'information de vérification (R2) sont respectivement des nombres aléatoires.

8. Procédé selon la revendication 1, **caractérisé en ce qu'**un premier code (T₀) personnel, en tant que code variable, est transmis à un utilisateur (11) en même temps que la remise d'un support de données (1) portable.

9. Procédé selon la revendication 1, **caractérisé en ce que** le code (T₂) supplémentaire est transféré au lecteur (2) après que l'authentification a été effectuée avec succès.

10. Support de données portable destiné à la mise en oeuvre d'un procédé selon la revendication 1, comportant un corps de carte et un microcontrôleur (3), **caractérisé en ce que** dans le microcontrôleur (3) est implémentée une règle de formation qui, à l'égard d'une première valeur pour un code (Tₙ), génère une valeur consécutive pour un code (Tₙ₊₁).

11. Support de données portable selon la revendication 10, **caractérisé en ce que** le support de données (1) portable dispose d'un générateur de nombres aléatoires (RNG) pour générer un nombre aléatoire qui s'insère dans la règle de formation et détermine la valeur consécutive pour un code (Tₙ₊₁).
